# EUROPÄISCHE PATENTSCHRIFT

(11) **EP 3 161 386 B1**
(45) Veröffentlichungstag und Bekanntmachung des Hinweises auf die Patenterteilung: **20.02.2019**
(21) Anmeldenummer: 15733905.2
(22) Anmeldetag: 29.05.2015
(51) Int. Cl.: F24C 15/10, F24C 3/08

(54) **GASKOCHSTELLE**
GAS COOKING HOB
FOYER DE CUISSON AU GAZ

(30) Priorität: 25.06.2014 ES 201430969
(43) Veröffentlichungstag der Anmeldung: 03.05.2017
(73) Patentinhaber: BSH Hausgeräte GmbH, 81739 München (DE)
(72) Erfinder: AGUADO VELA, Cesar, E-39600 Camargo (ES); BUENAGA COTERA, Hector, E-39540 San Vicente de la Barquera (Cantabria) (ES); GONZALEZ LLANA, Enrique, E-39310 Miengo (ES); GUTIERREZ HUMARA, Melca, E-39650 La Penilla (ES); HERRERA RUIZ, Alfonso, E-39600 Maliaño (Cantabria) (ES); PLACER MARURI, Emilio, E-39120 Liencres (ES)
(86) Internationale Anmeldenummer: PCT/IB2015/054065
(87) Internationale Veröffentlichungsnummer: WO 2015/198173

(56) Entgegenhaltungen:
- DE-U1- 9 305 316
- FR-A1- 2 177 598
- KR-A- 20110 137 918
- US-A- 698 010
- US-A- 1 942 265

## Beschreibung

Die vorliegende Erfindung betrifft eine Gaskochstelle. Ein Gasherd bzw. eine Gaskochmulde weist zumeist eine Deckplatte bzw. ein sogenanntes Top Sheet auf, an dem Gasbrenner des Gasherds bzw. der Gaskochmulde befestigt sein können. Die Gaskochmulde umfasst eine Kochmuldenwanne und die beabstandet von der Kochmuldenwanne angeordnete Deckplatte. Um ein Verbiegen oder Verwölben der Deckplatte im Betrieb der Gaskochmulde, beispielsweise durch Hitzeeinwirkung oder Gewichtsbelastung, zu verhindern, kann an der Kochmuldenwanne ein Versteifungselement vorgesehen sein, das die Deckplatte stabilisiert. Ein derartiges Versteifungselement ist beispielsweise jeweils in der EP 2 202 464 A1 und in der EP 2 202 463 A2 beschrieben.
Die US 1,942,265 A beschreibt einen Gasherd mit einer Hauptgasleitung, an der zu Gasbrennern führende Gaszufuhrleitungen befestigt sind. Die Hauptgasleitung ist unter einer Deckplatte des Gasherds angeordnet.
Die FR 2 177 598 A1 beschreibt einen Gasherd mit einer Hauptgasleitung, an der eine Stützeinrichtung zum Abstützen einer Deckplatte und eines Deckels des Gasherds vorgesehen ist.
Die DE 93 05 316 U1 beschreibt eine Kochmulde mit austauschbaren Heizelementen.
Die US 698,010 A beschreibt einen Gasherd mit einer Hauptgasleitung, von der Gaszufuhrleitungen zu Gasbrennern abzweigen. Die Hauptgasleitung ist unter einer Deckplatte des Gasherds vorgesehen.
Vor diesem Hintergrund besteht eine Aufgabe der vorliegenden Erfindung darin, eine verbesserte Gaskochstelle zur Verfügung zu stellen.
Demgemäß wird eine Gaskochstelle mit mindestens einem Gasbrenner, einer Deckplatte, an der der mindestens eine Gasbrenner befestigt ist, einer Hauptgasleitung zum Zuführen von Brenngas zu der Gaskochstelle und einer Stützeinrichtung zum Abstützen der Deckplatte vorgeschlagen, wobei die Stützeinrichtung lösbar an der Hauptgasleitung befestigt ist und wobei die Stützeinrichtung an die Hauptgasleitung angeclipst ist.

Dadurch, dass die Stützeinrichtung an der Hauptgasleitung befestigt ist, kann auf ein zusätzliches an der Kochmuldenwanne vorgesehenes Versteifungselement verzichtet werden. Weiterhin weist die oben beschriebene Stützeinrichtung einen geringeren Bauraum auf als bekannte Versteifungselemente. Hierdurch kann die Stützeinrichtung besonders gut im Bereich eines Bedienfelds der Gaskochstelle, das heißt, im Bereich der Gasventile eingesetzt werden. Insbesondere ist die Stützeinrichtung aufgrund ihres geringen Bauraums für Gaskochstellen geeignet, die im Bereich der Gasventile viele elektronische Komponenten aufweisen. Die Stützeinrichtung ist an einem dem Benutzer zugewandten Teil der Deckplatte angeordnet. Insbesondere ist die Stützeinrichtung an einem vorderen Drittel der Deckplatte angeordnet. Da für den Benutzer das Bedienfeld ein optischer Referenzpunkt der Gaskochstelle bzw. eines Herds mit einer derartigen Gaskochstelle ist, ermöglicht die Stützeinrichtung , dass insbesondere im Bereich des Bedienfelds eine störende Verwölbung oder Verzerrung der Deckplatte verhindert oder zumindest reduziert wird. Die Stützeinrichtung ist insbesondere zum Abstützen und/oder Stabilisieren der Deckplatte eingerichtet. Hierunter ist insbesondere zu verstehen, dass die Stützeinrichtung ein Verformen, Verbiegen, Verwölben und/oder Verziehen der Deckplatte durch Hitzeeinwirkung oder Gewichtseinwirkung verhindert oder zumindest reduziert. Die Stützeinrichtung kann ferner zusätzlich an einer von der Hauptgasleitung abzweigenden Gaszuleitung befestigt sein. Es können mehrere Stützeinrichtungen vorgesehen sein.

Die Stützeinrichtung lösbar an der Hauptgasleitung befestigt.

Hierdurch ist die Stützeinrichtung schnell und einfach an der Hauptgasleitung montierbar.

Die Stützeinrichtung ist an die Hauptgasleitung angeclipst.

Hierdurch ist eine werkzeugfreie Montage und Demontage der Stützeinrichtung möglich.

Gemäß einer weiteren Ausführungsform weist die Stützeinrichtung einen leistenförmigen Stützabschnitt auf, wobei die Stützeinrichtung so angeordnet ist, dass der Stützabschnitt entlang der Hauptgasleitung verläuft.

Hierdurch liegt der Stützabschnitt über seine gesamte Länge auf der Hauptgasleitung auf. Dies führt zu einer besonders guten Abstützung und/oder Stabilisierung der Deckplatte.

Gemäß einer weiteren Ausführungsform ist an dem Stützabschnitt mindestens ein Aufnahmeabschnitt vorgesehen, der dazu eingerichtet ist, die Hauptgasleitung teilweise zu umgreifen.

Vorzugsweise sind mehrere Aufnahmeabschnitte wie beispielsweise zwei Aufnahmeabschnitte vorgesehen. Hierdurch ist ein sicherer Halt des Stützabschnitts an der Hauptgasleitung gewährleistet. Die Stützeinrichtung ist vorzugsweise ausschließlich an der Hauptgasleitung und/oder der Deckplatte befestigt. Insbesondere ist die Stützeinrichtung nicht an der Kochmuldenwanne bzw. an Seitenwänden der Kochmuldenwanne befestigt.

Gemäß einer weiteren Ausführungsform weist der mindestens eine Aufnahmeabschnitt Greifarme auf, die elastisch verformbar sind.

Die Greifarme sind vorzugsweise einander gegenüberliegend angeordnet. Jeder Aufnahmeabschnitt weist vorzugsweise zwei Greifarme auf, die eine U-Form bilden.

Gemäß einer weiteren Ausführungsform weist der Stützabschnitt einen V-förmigen Querschnitt auf.

Der Stützabschnitt ist insbesondere so angeordnet, dass eine Spitze des V-förmigen Querschnitts von der Hauptgasleitung weg in Richtung der Deckplatte weist.

Gemäß einer weiteren Ausführungsform sind der Stützabschnitt und der mindestens eine Aufnahmeabschnitt materialeinstückig ausgebildet.

Beispielsweise ist die Stützeinrichtung ein Kunststoffspritzgussbauteil. Hierdurch kann die Stützeinrichtung kostengünstig in großen Stückzahlen hergestellt werden.

Gemäß einer weiteren Ausführungsform ist die Stützeinrichtung aus einem Kunststoffmaterial gefertigt.

Vorzugsweise ist die Stützeinrichtung aus einem temperaturfesten Kunststoffmaterial gefertigt. Beispielsweise kann die Stützeinrichtung aus einem Polyetheretherketon hergestellt sein. Die Stützeinrichtung ist vorzugsweise faserverstärkt, insbesondere glasfaserverstärkt.

Gemäß einer weiteren Ausführungsform ist die Stützeinrichtung an der Deckplatte befestigt.

Hierdurch wird eine verbesserte Stütz- und/oder Stabilisierungsfunktion der Stützeinrichtung erreicht.
Gemäß einer weiteren Ausführungsform ist die Stützeinrichtung mit der Deckplatte verklebt, verstemmt, verschraubt und/oder vernietet.
Weiterhin wird eine Kochmulde mit einer derartigen Gaskochstelle vorgeschlagen.
Die Kochmulde ist insbesondere Teil eines Haushaltsgeräts. Beispielsweise kann die Kochmulde Teil eines Herds sein.
Weitere mögliche Implementierungen der Gaskochstelle und/oder der Kochmulde umfassen auch nicht explizit genannte Kombinationen von zuvor oder im Folgenden bezüglich der Ausführungsbeispiele beschriebenen Merkmale oder Ausführungsformen wobei diese nicht erfindungsgemäß sind. Dabei wird der Fachmann auch Einzelaspekte als Verbesserungen oder Ergänzungen zu der jeweiligen Grundform der Gaskochstelle und/oder der Kochmulde hinzufügen.
Weitere vorteilhafte Ausgestaltungen und Aspekte der Gaskochstelle und/oder der Kochmulde sind Gegenstand der Unteransprüche sowie der im Folgenden beschriebenen Ausführungsbeispiele der Erfindung. Im Weiteren werden die Gaskochstelle und/oder die Kochmulde anhand von bevorzugten Ausführungsformen unter Bezugnahme auf die beigelegten Figuren näher erläutert.
Fig. 1 zeigt eine schematische perspektivische Ansicht einer Ausführungsform einer Kochmulde;
Fig. 2 zeigt eine schematische Schnittansicht der Kochmulde gemäß der Fig. 1;
Fig. 3 zeigt eine schematische perspektivische Ansicht einer Stützeinrichtung für die Kochmulde gemäß der Fig. 1; und
Fig. 4 zeigt eine weitere schematische perspektivische Ansicht der Stützeinrichtung gemäß der Fig. 3.

In den Figuren sind gleiche oder funktionsgleiche Elemente mit denselben Bezugszeichen versehen worden, sofern nichts anderes angegeben ist.

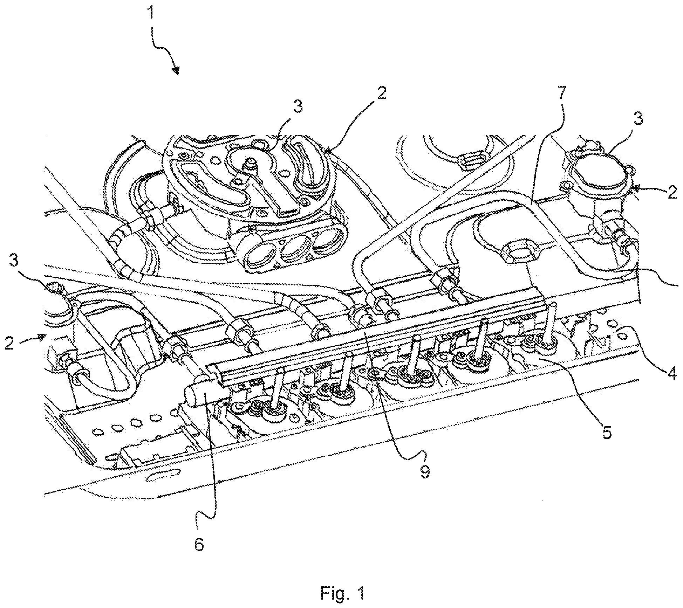

Die Fig. 1 zeigt eine schematische perspektivische Ansicht einer Kochmulde 1. Die Kochmulde 1 ist insbesondere eine Gaskochmulde. Die Kochmulde 1 kann Teil eines Herds sein. Die Kochmulde 1 umfasst zumindest eine Gaskochstelle 2 mit einem Gasbrenner 3. Die Kochmulde 1 weist weiterhin eine Kochmuldenwanne 4 auf, die aus einem Stahlblech gefertigt sein kann.

An oder in der Kochmuldenwanne 4 sind Gasregelventile 5 vorgesehen, von denen in der Fig. 1 lediglich eines mit einem Bezugszeichen versehen ist. Die Gasregelventile 5 sind an einer Hauptgasleitung 6 der Gaskochstelle 2 angebracht. Insbesondere sind die Gasregelventile 5 an die Hauptgasleitung 6 angeklemmt. Jedes Gasregelventil 5 ist über eine Gaszuleitung 7 mit einem ihm zugeordneten Gasbrenner 3 fluidisch verbunden. Die Gasregelventile 5 sind dazu eingerichtet, einen Brenngasstrom von der Hauptgasleitung 6 über die Gaszuleitung 7 hin zu dem Gasbrenner 3 zu regeln.

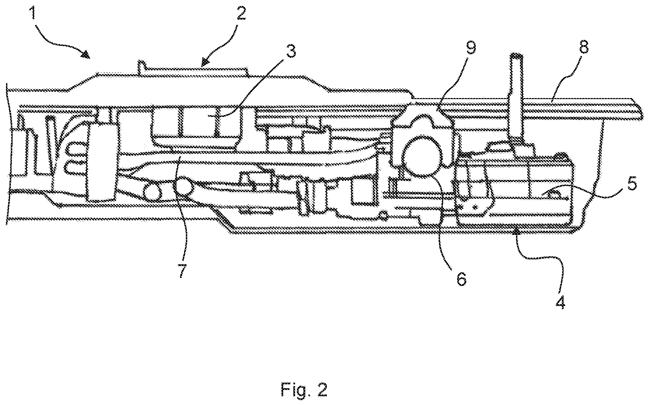

Die Fig. 2 zeigt eine schematische Schnittansicht durch die Kochmulde 1. Die Kochmulde 1 weist ferner eine Deckplatte 8 auf. Die Deckplatte 8 kann auch als sogenanntes Top Sheet bezeichnet werden. Die Deckplatte 8 ist beispielsweise aus einem Stahlblech oder aus Glas gefertigt. Das Gasregelventil 5, die Hauptgasleitung 6, die Gaszuleitung 7 und der Gasbrenner 3 sind zwischen der Kochmuldenwanne 4 und der Deckplatte 8 angeordnet. Der Gasbrenner 3 ragt zumindest teilweise nach oben über die Deckplatte 8 hinaus. Die Gaskochstelle 2 weist ferner eine Stützeinrichtung 9 auf. Die Stützeinrichtung 9 ist zwischen der Hauptgasleitung 6 und der Deckplatte 8 angeordnet. Die Stützeinrichtung 9 ist dazu eingerichtet, die Deckplatte 8 abzustützen und/oder zu stabilisieren. Das heißt, die Stützeinrichtung 9 ist dazu eingerichtet, ein Verwölben, Verziehen und/oder Verbiegen der Deckplatte 8 zu verhindern, wenn diese beispielsweise durch Hitzeeinwirkung und/oder Krafteinwirkung belastet ist.

Die Stützeinrichtung 9 ist an der Hauptgasleitung 6 befestigt. Zusätzlich kann die Stützeinrichtung 9 an der Deckplatte 8 befestigt sein. Beispielsweise kann die Stützeinrichtung 9 mit der Deckplatte 8 verklebt, verstemmt, verschraubt und/oder vernietet sein.

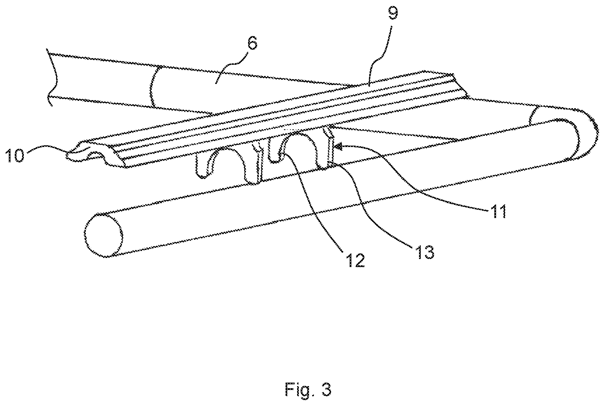

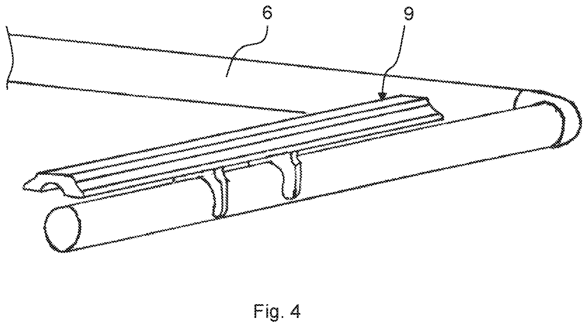

Die Fig. 3 und 4 zeigen jeweils in einer schematischen perspektivischen Ansicht die Stützeinrichtung 9 mit der Hauptgasleitung 6. Die Stützeinrichtung 9 ist vorzugsweise lösbar an der Hauptgasleitung 6 befestigt. Alternativ oder zusätzlich kann die Stützeinrichtung 9 an einer oder mehrerer der Gaszuleitungen 7 befestigt sein. Die Stützeinrichtung 9 ist an die Hauptgasleitung 6 angeclipst, so dass diese ohne Werkzeugeinsatz an der Hauptgasleitung 6 befestigt und wieder von dieser gelöst werden kann.
Die Stützeinrichtung 9 weist einen leistenförmigen Stützabschnitt 10 auf. Die Stützeinrichtung 9 ist so anordenbar, dass der Stützabschnitt 10 entlang der Hauptgasleitung 6 verläuft. Der Stützabschnitt 10 hat einen V-förmigen Querschnitt. Die Stützeinrichtung 9 ist so angeordnet, dass eine Spitze des V-förmigen Querschnitts von der Hauptgasleitung 6 weg weist.
An dem Stützabschnitt 10 ist mindestens ein Aufnahmeabschnitt 11 vorgesehen, der dazu eingerichtet ist, die Hauptgasleitung 6 zumindest teilweise zu umgreifen. Der Aufnahmeabschnitt 11 weist vorzugsweise eine U-Form auf. Insbesondere sind an dem Stützabschnitt 10 zwei derartige Aufnahmeabschnitte 11 vorgesehen, die voneinander beabstandet angeordnet sind. Ferner können weitere, beispielsweise drei oder vier Aufnahmeabschnitte 11 vorgesehen sein. Jeder Aufnahmeabschnitt weist Greifarme 12, 13 auf, die elastisch verformbar sind. Der Stützabschnitt 10 und der mindestens eine Aufnahmeabschnitt 11 sind vorzugsweise materialeinstückig ausgebildet. Vorzugsweise ist die Stützeinrichtung 9 aus einem Kunststoffmaterial gefertigt. Beispielsweise kann die Stützeinrichtung 9 ein Kunststoffspritzgussbauteil sein. Alternativ kann die Stützeinrichtung 9 aus einem Metallwerkstoff oder zumindest teilweise aus einem Metallwerkstoff gefertigt sein.

### Verwendete Bezugszeichen:

- 1: Kochmulde
- 2: Gaskochstelle
- 3: Gasbrenner
- 4: Kochmuldenwanne
- 5: Gasregelventil
- 6: Hauptgasleitung
- 7: Gaszuleitung
- 8: Deckplatte
- 9: Stützeinrichtung
- 10: Stützabschnitt
- 11: Aufnahmeabschnitt
- 12: Greifarm
- 13: Greifarm

## Patentansprüche

1. Gaskochstelle (2) mit mindestens einem Gasbrenner (3), einer Deckplatte (8), an der der mindestens eine Gasbrenner (3) befestigt ist, einer Hauptgasleitung (6) zum Zuführen von Brenngas zu der Gaskochstelle (2) und einer Stützeinrichtung (9) zum Abstützen der Deckplatte (8), wobei die Stützeinrichtung (9) lösbar an der Hauptgasleitung (6) befestigt ist und wobei die Stützeinrichtung (9) an die Hauptgasleitung (6) angeclipst ist.

2. Gaskochstelle nach Anspruch 1, **dadurch gekennzeichnet, dass** die Stützeinrichtung (9) einen leistenförmigen Stützabschnitt (10) aufweist und dass die Stützeinrichtung (9) so angeordnet ist, dass der Stützabschnitt (10) entlang der Hauptgasleitung (6) verläuft.

3. Gaskochstelle nach Anspruch 2, **dadurch gekennzeichnet, dass** an dem Stützabschnitt (10) mindestens ein Aufnahmeabschnitt (11) vorgesehen ist, der dazu eingerichtet ist, die Hauptgasleitung (6) teilweise zu umgreifen.

4. Gaskochstelle nach Anspruch 3, **dadurch gekennzeichnet, dass** der mindestens eine Aufnahmeabschnitt (11) Greifarme (12, 13) aufweist, die elastisch verformbar sind.

5. Gaskochstelle nach einem der Ansprüche 2 - 4, **dadurch gekennzeichnet, dass** der Stützabschnitt (10) einen V-förmigen Querschnitt aufweist.

6. Gaskochstelle nach Anspruch 3, **dadurch gekennzeichnet, dass** der Stützabschnitt (10) und der mindestens eine Aufnahmeabschnitt (11) materialeinstückig ausgebildet sind.

7. Gaskochstelle nach einem der Ansprüche 1 - 6, **dadurch gekennzeichnet, dass** die Stützeinrichtung (9) aus einem Kunststoffmaterial gefertigt ist.

8. Gaskochstelle nach einem der Ansprüche 1 - 7, **dadurch gekennzeichnet, dass** die Stützeinrichtung (9) an der Deckplatte (8) befestigt ist.

9. Gaskochstelle nach Anspruch 8, **dadurch gekennzeichnet, dass** die Stützeinrichtung (9) mit der Deckplatte (8) verklebt, verstemmt, verschraubt und/oder vernietet ist.

10. Kochmulde (1) mit einer Gaskochstelle (2) nach einem der Ansprüche 1 - 9.

## Claims

1. Gas cooking zone (2) with at least one gas burner (3), a cover plate (8), to which the at least one gas burner (3) is fastened, a main gas line (6) for supplying combustion gas to the gas cooking zone (2) and a supporting facility (9) for bracing the cover plate (8), wherein the supporting facility (9) is fastened to the main gas line (6) in a detachable manner and wherein the supporting facility (9) is clipped onto the main gas line (6).

2. Gas cooking zone according to claim 1, **characterised in that** the supporting facility (9) has a bar-shaped supporting section (10) and that the supporting facility (9) is arranged such that the supporting section (10) runs along the main gas line (6).

3. Gas cooking zone according to claim 2, **characterised in that** there is provision on the supporting section (10) for at least one receiving section (11), which is configured to encompass the main gas line (6) to some extent.

4. Gas cooking zone according to claim 3, **characterised in that** the at least one receiving section (11) has gripping arms (12, 13) which are resiliently deformable.

5. Gas cooking zone according to one of claims 2 - 4, **characterised in that** the supporting section (10) has a V-shaped cross-section.

6. Gas cooking zone according to claim 3, **characterised in that** the supporting section (10) and the at least one receiving section (11) are embodied as made of the same piece of material.

7. Gas cooking zone according to one of claims 1 - 6, **characterised in that** the supporting facility (9) is produced from a plastic material.

8. Gas cooking zone according to one of claims 1 - 7, **characterised in that** the supporting facility (9) is fastened to the cover plate (8).

9. Gas cooking zone according to claim 8, **characterised in that** the supporting facility (9) is adhesively bonded, caulked, screwed and/or riveted to the cover plate (8).

10. Hob (1) with a gas cooking zone (2) according to one of claims 1 - 9.

## Revendications

1. Foyer de cuisson à gaz (2) comportant au moins un brûleur de gaz (3), une plaque de recouvrement (8), à laquelle le au moins un brûleur de gaz (3) est fixé, un conduit de gaz principal (6) servant à amener le gaz combustible au foyer de cuisson à gaz (2) et un dispositif de support (9) servant à soutenir la plaque de recouvrement (8), dans lequel le dispositif de support (9) est fixé de manière détachable au conduit de gaz principal (6) et le dispositif de support (9) est clipsé sur le conduit de gaz principal (6).

2. Foyer de cuisson à gaz selon la revendication 1, **caractérisé en ce que** le dispositif de support (9) comporte une partie de support en forme de barre (10) et **en ce que** le dispositif de support (9) est agencé de telle manière que la partie de support en forme de barre (10) s'étend le long du conduit de gaz principal (6).

3. Foyer de cuisson à gaz selon la revendication 2, **caractérisé en ce qu'**au moins une partie de réception (11) est agencée contre la partie de support (10), laquelle partie de réception (11) est conçue de façon à entourer au moins en partie le conduit de gaz principal (6).

4. Foyer de cuisson à gaz selon la revendication 3, **caractérisé en ce que** la au moins une partie de réception (11) comprend des bras de préhension (12, 13) qui sont élastiquement déformables.

5. Foyer de cuisson à gaz selon l'une des revendications 2 à 4, **caractérisé en ce que** la partie de support (10) a une section transversale en forme de V.

6. Foyer de cuisson à gaz selon la revendication 3, **caractérisé en ce que** la partie de support (10) et la au moins une partie de réception (11) sont formées d'un seul tenant.

7. Foyer de cuisson à gaz selon l'une des revendications 1 à 6, **caractérisé en ce que** le dispositif de support (9) est fabriqué en une matière plastique.

8. Foyer de cuisson à gaz selon l'une des revendications 1 à 7, **caractérisé en ce que** le dispositif de support (9) est fixé à la plaque de recouvrement (9).

9. Foyer de cuisson à gaz selon la revendication 8, **caractérisé en ce que** le dispositif de support (9) est collé, serti, vissé et/ou riveté à la plaque de recouvrement (8).

10. Table de cuisson (1) comprenant un foyer de cuisson à gaz (2) selon l'une des revendications 1 à 9.
